# EUROPEAN PATENT APPLICATION

(11) **EP 2 234 028 A1**
(43) Date of publication of application: **29.09.2010**
(21) Application number: 10154939.2
(22) Date of filing: 26.02.2010
(51) Int. Cl.: G06F 21/00

(54) **System and method of handling encrypted backup data**

(30) Priority: 26.02.2009 US 155570 P
(71) Applicant: RESEARCH IN MOTION LIMITED, Waterloo, Ontario N2L 3W8 (CA)
(72) Inventor: Singh, Ravi, Waterloo Ontario N2L 5Z5 (CA); Adams, Neil Patrick, Waterloo Ontario N2L 5Z5 (CA)
(74) Representative: Patel, Binesh

(57) **Abstract**

By using a symmetric key to encrypt mobile device data before transmitting the data to a backup location in a backup operation, access to the data, at the backup location, may be restricted. To facilitate later decryption of the backed up mobile device data, the mobile device may also transmit the symmetric key to the off-device location. However, to limit use of the symmetric key, the mobile device may encrypt the symmetric key using authentication data, before transmitting the encrypted symmetric key to the backup location.

## Description

The present application relates generally to backing up, and restoring, data from a mobile device and, more specifically, to handling of encrypted backup data as the backup data is stored or restored.

It is increasingly common that individuals collect and store large amounts of data. Often the data relates to particular applications. For instance, the data for a contact management application may comprise address book entries. Further, the data for a calendar application may comprise to-do list entries and appointments. For convenience, the data may be maintained at an enterprise server and accessed, for example by a user at a desktop computer, using a client application. However, access to the same data may be desired while away from the desktop computer. Accordingly, a market has developed for mobile, handheld computing devices capable of storing most, if not all, of the data associated with the user at the enterprise server. Through synchronization mechanisms, the data in a store on the mobile device can be made to accurately reflect corresponding data in a store at the enterprise server. While having the data exist on both the mobile device and the enterprise server may seem to represent suitable redundancy, it may still behoove the mobile device user to backup data from the mobile to at least one further location. The further location may, for instance, be a main memory of a desktop (or laptop) computer. The mobile device may connect to the desktop computer by a cable connection using, for example, the Universal Serial Bus communication protocol. Alternatively, or additionally, the further location may, for instance, be a main memory of a mobile device server. The mobile device may connect to the mobile device server using a wireless data communication channel.

### GENERAL

While access to data on a mobile device may be securely restricted through the use of authentication data, there has, heretofore, been no suggestion of restricting access to mobile device data that has been backed up. That is, the mobile device backup data that has been backed up, for instance, to a mobile device server, may be available for review by an administrator of the mobile device server. It is notable that mobile device backup data may also be stored on a removable memory received by the mobile device. Without regard to the mode (wired, wireless) of connection, when the mobile device is connected to a computer (e.g., a desktop or notebook computer), mobile device backup data may also be stored at the computer.

By using a symmetric key to encrypt mobile device data before transmitting the data to a backup location in a backup operation, access to the data, at the backup location, may be restricted. To facilitate later decryption of the backed up mobile device data, the mobile device may also transmit the symmetric key to the backup location. However, to limit use of the symmetric key, the mobile device may encrypt the symmetric key using authentication data, such as a password, before transmitting the encrypted symmetric key to the backup location.

According to an aspect of the present disclosure, there is provided, at a mobile communication device, a method of facilitating secure backing up of data in a backup location. The method comprises encrypting a symmetric key to form an encrypted symmetric key, transmitting the encrypted symmetric key to the backup location and encrypting the data with the symmetric key, thereby forming encrypted data. In other aspects of the present application, a mobile communication device is provided for carrying out this method and a computer readable medium is provided for adapting a processor in a mobile communication device to carry out this method.

According to another aspect of the present disclosure, there is provided, at a mobile communication device, a method of restoring previously backed up data. The method comprises transmitting a request for the previously backed up data, receiving the previously backed up data, transmitting a request for a key used to encrypt the previously backed up data, receiving the key, using authentication data to decrypt the key, thereby producing a decrypted key and using the decrypted key to decrypt the previously backed up data. In other aspects of the present application, a mobile communication device is provided for carrying out this method and a computer readable medium is provided for adapting a processor in a mobile communication device to carry out this method.

According to still another aspect of the present disclosure, there is provided, at a mobile communication device, a method of facilitating access to encrypted data restored from a backup location. The method comprises receiving an encrypted version of a key, where the key has been used to encrypt the encrypted data, determining that authentication data has been received and using the authentication data to decrypt the encrypted version of the key.

According to a still further aspect of the present disclosure, there is provided, at a mobile communication device, a method of facilitating access to encrypted data restored from a backup location. The method comprises receiving an encrypted version of a key, where the key has been used to encrypt the encrypted data, employing a user interface of the mobile communication device to display a prompt requesting authentication data, determining that the authentication data has been provided and using the authentication data to decrypt the encrypted version of the key.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

Reference will now be made to the drawings, which show by way of example, embodiments of the invention, and in which:

FIG. 1 illustrates an overview of an example system including a mobile communication device and a wireless mail server;

FIG. 2 illustrates a schematic representation of components of the mobile communication device of FIG. 1;

FIG. 3 illustrates example steps in a method, for execution by the mobile communication device of FIG. 1, of facilitating encrypted storage of application-specific data;

FIG. 4 illustrates example steps in a method, for execution by the mobile communication device of FIG. 1, of implementing encrypted storage of application-specific data.

FIG. 5 illustrates example steps in a data restoration method for execution by the mobile communication device of FIG. 1;

FIG. 6 illustrates example steps in a first data restoration method for execution by a mobile communication device distinct from the mobile communication device of FIG. 1;

FIG. 7 illustrates example steps in a second data restoration method for execution by a mobile communication device distinct from the mobile communication device of FIG. 1; and

FIG. 8 illustrates example steps in a method of re-encrypting a symmetric key responsive to a change in device password at the mobile communication device of FIG. 1.

### DESCRIPTION OF THE PREFERRED EMBODIMENTS

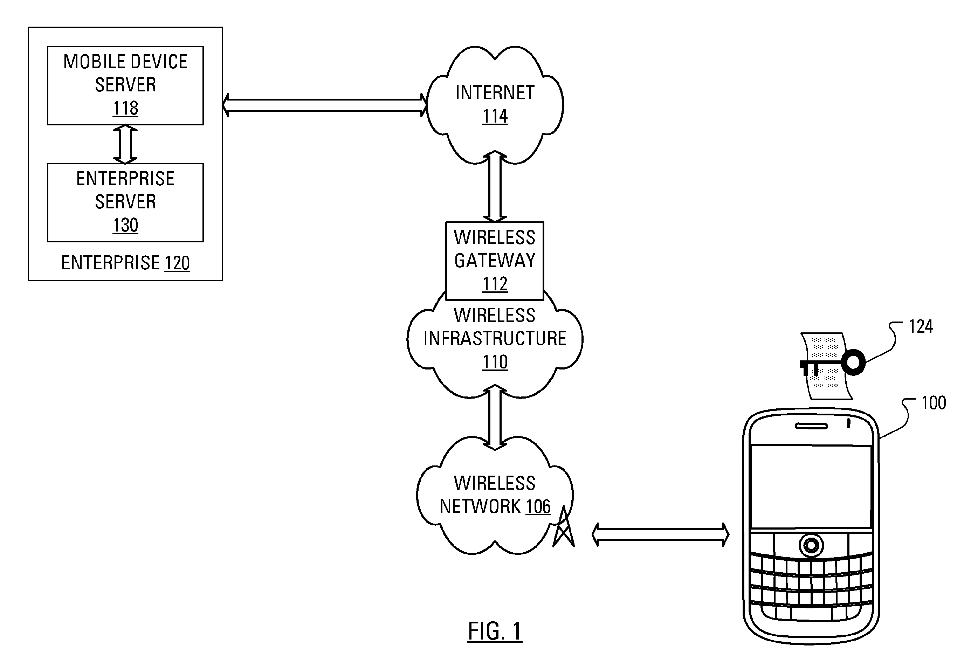

Referring to FIG. 1, an overview of an example system for use with the embodiments described below is shown. One skilled in the art will appreciate that there may be many different topologies, but the system shown in FIG. 1 helps demonstrate the operation of the systems and methods described in the present application. For example, there may be many mobile communication devices connected to the system that are not shown in the overview of FIG. 1.

FIG. 1 shows a mobile device in the form of a mobile communication device 100. It will be appreciated by those skilled in the art that the mobile communication device 100 may comprise any computing or communication device that is capable of connecting to a network by wireless means, including, but not limited to, personal computers (including tablet and laptop computers), personal digital assistants, smart phones, and the like. It will further be appreciated by those skilled in the art that these devices may be referred to herein as computing devices or communication devices, and may have principal functions directed to data or voice communication over a network, data storage or data processing, or the operation of personal or productivity applications; those skilled in the art will appreciate that terminology such as "mobile device", "communication device", "computing device", or "user device" may be used interchangeably.

The mobile communication device 100 may, for example, be connected to an Internet Service Provider on which a user of the system of FIG. 1, likely the user associated with the mobile communication device 100 illustrated in FIG. 1, has an account.

The mobile communication device 100 may be capable of sending and receiving messages and other data via wireless transmission and reception, as is typically done using electromagnetic waves in the radio frequency (RF) spectrum. The exchange of messages and other data may occur, for instance, between the mobile communication device 100 and a base station in a wireless network 106. The mobile communication device 100 may receive data by other means, for example through a direct connection to a port provided on the mobile communication device 100. An example of such a direct connection is a Universal Serial Bus (USB) link.

As illustrated in FIG. 1, the wireless network 106 connects to a wide area network 114, represented as the Internet, via a wireless infrastructure 110. The wireless infrastructure 110 incorporates a wireless gateway 112 for connecting to the Internet 114.

A connection between the mobile communication device 100 and the Internet 114 allows the mobile communication device 100 to access a mobile device server 118. The mobile device server 118 may be grouped together with other servers, including an enterprise server 130, in an enterprise 120. The mobile communication device 100 may store a symmetric cryptographic key 124.

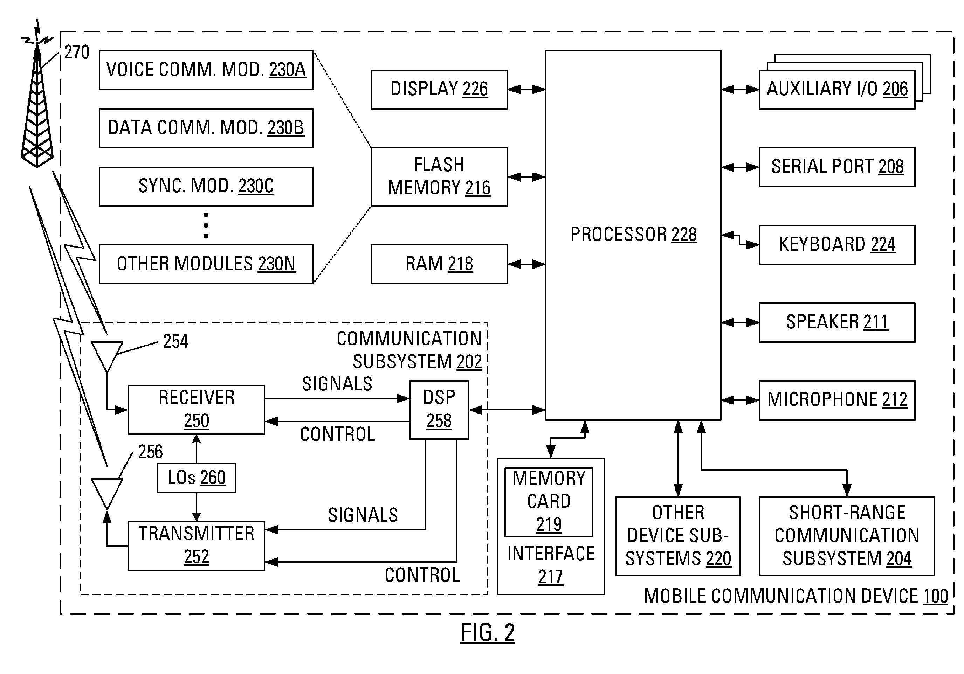

FIG. 2 illustrates the mobile communication device 100 in accordance with an exemplary embodiment. The mobile communication device 100 includes a housing, an input device (e.g., a keyboard 224 having a plurality of keys) and an output device (e.g., a display 226), which may be a full graphic, or full color, Liquid Crystal Display (LCD). In some embodiments, the display 226 may comprise a touchscreen display. In such embodiments, the keyboard 224 may comprise a virtual keyboard. Other types of output devices may alternatively be utilized. A processing device (a processor 228) is shown schematically in FIG. 2 as coupled between the keyboard 224 and the display 226. The processor 228 controls the operation of the display 226, as well as the overall operation of the mobile communication device 100, in part, responsive to actuation of the keys on the keyboard 224 by a user. Notably, the keyboard 224 may comprise physical buttons (keys) or, where the display 226 is a touchscreen device, the keyboard 224 may be implemented, at least in part, as "soft keys". Actuation of a so-called soft key involves either touching the display 226 where the soft key is displayed or actuating a physical button in proximity to an indication, on the display 226, of a temporary action associated with the physical button.

The housing may be elongated vertically, or may take on other sizes and shapes (including clamshell housing structures). Where the keyboard 224 includes keys that are associated with at least one alphabetic character and at least one numeric character, the keyboard 224 may include a mode selection key, or other hardware or software, for switching between alphabetic entry and numeric entry.

In addition to the processor 228, other parts of the mobile communication device 100 are shown schematically in FIG. 2. These may include a communications subsystem 202, a short-range communications subsystem 204, the keyboard 224 and the display 226. The mobile communication device 100 may further include other input/output devices, such as a set of auxiliary I/O devices 206, a serial port 208, a speaker 211 and a microphone 212. The mobile communication device 100 may further include memory devices including a flash memory 216 and a Random Access Memory (RAM) 218 and various other device subsystems 220. In addition to the on-device memory, additional memory 219 may be received by the mobile communication device 100 at a memory interface 217. An example of such additional memory 219 is an "Secure Digital" memory card, as standardized by the SD Association, which is a global alliance of more than 1,100 companies involved in the design, development, manufacture or sale of products using SD technology. The mobile communication device 100 may comprise a two-way radio frequency (RF) communication device having voice and data communication capabilities. In addition, the mobile communication device 100 may have the capability to communicate with other computer systems via the Internet.

Operating system software executed by the processor 228 may be stored in a computer readable medium, such as the flash memory 216, but may be stored in other types of memory devices, such as a read only memory (ROM) or similar storage element. In addition, system software, specific device applications, or parts thereof, may be temporarily loaded into a volatile store, such as the RAM 218.

### Communication signals received by the mobile device may also be stored to the RAM 218.

The processor 228, in addition to its operating system functions, enables execution of software applications on the mobile communication device 100. A predetermined set of software applications that control basic device operations, such as a voice communications module 230A and a data communications module 230B, may be installed on the mobile communication device 100 during manufacture. A synchronization module 230C may also be installed on the mobile communication device 100 during manufacture, to implement aspects of the present disclosure. As well, additional software modules, illustrated as an other software module 230N, which may be, for instance, a PIM application, may be installed during manufacture. The PIM application may be capable of organizing and managing data items, such as e-mail messages, calendar events, voice mail messages, appointments and task items. The PIM application may also be capable of sending and receiving data items via a wireless carrier network 270 represented by a radio tower. The data items managed by the PIM application may be seamlessly integrated, synchronized and updated via the wireless carrier network 270 with the device user's corresponding data items stored or associated with a host computer system.

Communication functions, including data and voice communications, are performed through the communication subsystem 202 and, possibly, through the short-range communications subsystem 204. The communication subsystem 202 includes a receiver 250, a transmitter 252 and one or more antennas, illustrated as a receive antenna 254 and a transmit antenna 256. In addition, the communication subsystem 202 also includes a processing module, such as a digital signal processor (DSP) 258, and local oscillators (LOs) 260. The specific design and implementation of the communication subsystem 202 is dependent upon the communication network in which the mobile communication device 100 is intended to operate. For example, the communication subsystem 202 of the mobile communication device 100 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), Enhanced Data rates for GSM Evolution (EDGE), Universal Mobile Telecommunications System (UMTS), Wideband Code Division Multiple Access (W-CDMA), High Speed Packet Access (HSPA), etc. Other types of data and voice networks, both separate and integrated, may also be utilized with the mobile communication device 100.

Network access requirements vary depending upon the type of communication system. Typically, an identifier is associated with each mobile device that uniquely identifies the mobile device or subscriber to which the mobile device has been assigned. The identifier is unique within a specific network or network technology. For example, in Mobitex™ networks, mobile devices are registered on the network using a Mobitex Access Number (MAN) associated with each device and in DataTAC™ networks, mobile devices are registered on the network using a Logical Link Identifier (LLI) associated with each device. In GPRS networks, however, network access is associated with a subscriber or user of a device. A GPRS device therefore uses a subscriber identity module, commonly referred to as a Subscriber Identity Module (SIM) card, in order to operate on a GPRS network. Despite identifying a subscriber by SIM, mobile devices within GSM/GPRS networks are uniquely identified using an International Mobile Equipment Identity (IMEI) number.

When required network registration or activation procedures have been completed, the mobile communication device 100 may send and receive communication signals over the wireless carrier network 270. Signals received from the wireless carrier network 270 by the receive antenna 254 are routed to the receiver 250, which provides for signal amplification, frequency down conversion, filtering, channel selection, etc., and may also provide analog to digital conversion. Analog-to-digital conversion of the received signal allows the DSP 258 to perform more complex communication functions, such as demodulation and decoding. In a similar manner, signals to be transmitted to the wireless carrier network 270 are processed (e.g., modulated and encoded) by the DSP 258 and are then provided to the transmitter 252 for digital to analog conversion, frequency up conversion, filtering, amplification and transmission to the wireless carrier network 270 (or networks) via the transmit antenna 256.

In addition to processing communication signals, the DSP 258 provides for control of the receiver 250 and the transmitter 252. For example, gains applied to communication signals in the receiver 250 and the transmitter 252 may be adaptively controlled through automatic gain control algorithms implemented in the DSP 258.

In a data communication mode, a received signal, such as a text message or web page download, is processed by the communication subsystem 202 and is input to the processor 228. The received signal is then further processed by the processor 228 for output to the display 226, or alternatively to some auxiliary I/O devices 206. A device user may also compose data items, such as e-mail messages, using the keyboard 224 and/or some other auxiliary I/O device 206, such as a touchpad, a rocker switch, a thumb-wheel, a trackball, a touchscreen, or some other type of input device. The composed data items may then be transmitted over the wireless carrier network 270 via the communication subsystem 202.

In a voice communication mode, overall operation of the device is substantially similar to the data communication mode, except that received signals are output to the speaker 211, and signals for transmission are generated by a microphone 212. Alternative voice or audio I/O subsystems, such as a voice message recording subsystem, may also be implemented on the mobile communication device 100. In addition, the display 226 may also be utilized in voice communication mode, for example, to display the identity of a calling party, the duration of a voice call, or other voice call related information.

The short-range communications subsystem 204 enables communication between the mobile communication device 100 and other proximate systems or devices, which need not necessarily be similar devices. For example, the short-range communications subsystem may include an infrared device and associated circuits and components, or a Bluetooth™ communication module to provide for communication with similarly-enabled systems and devices.

A user of the mobile communication device 100 may initiate execution, by the processor 228, of a user interface allowing the user to establish authentication data for use in obtaining access to data and applications on the mobile communication device 100 subsequent to the mobile communication device 100 having entered into a restricted access mode after a predetermined period of inactivity. Such authentication data may include an alphanumeric password and data generated based upon a gesture or a biometric.

Biometric authentication relates to automatically and uniquely recognizing humans based upon one or more intrinsic physical or behavioral traits. Biometric authentication often involves technologies that measure and analyze human physical and behavioral characteristics. Examples of physical characteristics include fingerprints, retinas, irises, facial patterns and hand measurements, while examples of mostly behavioral characteristics include signature, gait and typing patterns. Voice is considered a mix of both physical and behavioral characteristics.

In overview, an application executed by the processor 228 may use the symmetric key 124 to encrypt application-specific data. Subsequently, when synchronizing with the mobile device server 118, the mobile communication device 100 transmits the encrypted application-specific data to a backup location, such as the mobile device server 118. Conveniently, while the mobile device server 118 stores the encrypted application-specific data, a third party may not review the data. To facilitate decryption of the encrypted application-specific data, the mobile communication device 100 also transmits the symmetric key 124 to the mobile device server 118. However, to protect the symmetric key 124 from use at the mobile device server 118, the symmetric key 124 may be encrypted at the mobile communication device 100 before being transmitted, so that an encrypted version of the symmetric key 124 is received and stored at the mobile device server 118.

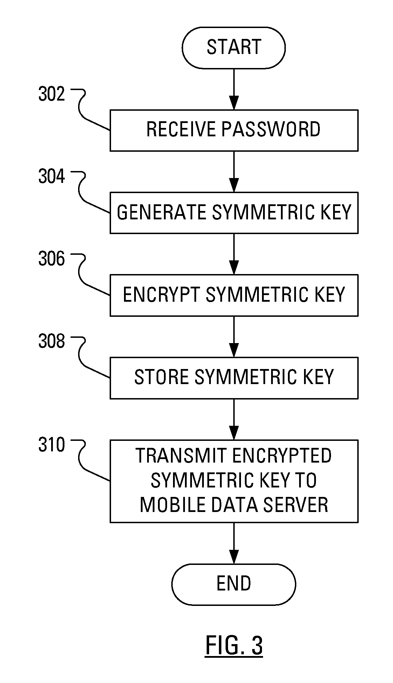

FIG. 3 illustrates example steps in a method of facilitating encrypted storage of application-specific data. When the user initially establishes authentication data, e.g., a password, the processor 228, acting under control of the instructions in the synchronization module 230C, receives (step 302) the recently established password and generates (step 304) the symmetric key 124. The processor 228 may then encrypt (step 306) the symmetric key 124 using the received password. The encrypted form of the symmetric key will be referred to as the password-encrypted symmetric key.

The processor 228 may store (step 308) the symmetric key 124 to non-volatile storage, such as a purposefully configured portion of the flash memory 216. Additionally, the processor 228 may also store, to the non-volatile storage, a time stamp indicating the time at which the symmetric key 124 was generated. Notably, the symmetric key 124 and time stamp, saved in this manner, are expected to persist in the flash memory 216 even through an upgrade to the operating system of the mobile communication device 100.

The processor 228 may also transmit (step 310) the encrypted version of the symmetric key 124, and the timestamp indicating when the symmetric key 124 was generated, to a backup location to be stored thereat. As noted previously, possible backup locations include the mobile device server 118, the additional memory 219 and an associated computer.

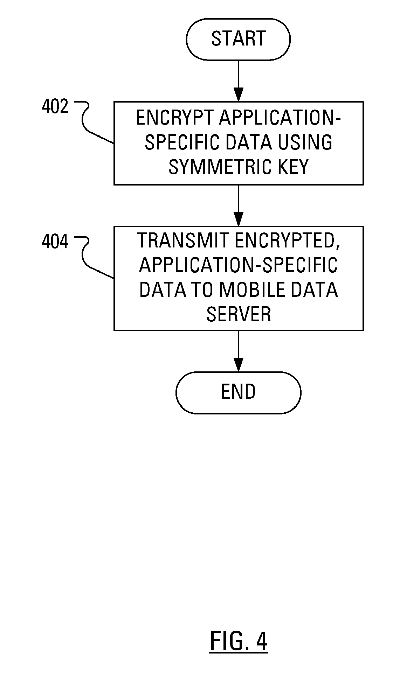

FIG. 4 illustrates example steps in a method of implementing encrypted storage of application-specific data. The Applicants have recognized that not all data on the mobile communication device 100 may need to be backed up. Accordingly, backing up data to the mobile device server 118 (or to the additional memory 219 or to an associated computer) may be left to the discretion of individual applications.

Upon determining that there exists application-specific data to back up, an application executed on the processor 228 may cause the processor 228 to encrypt (step 402) the application-specific data. The processor 228 may then transmit (step 404) the encrypted application-specific backup data to the mobile device server 118.

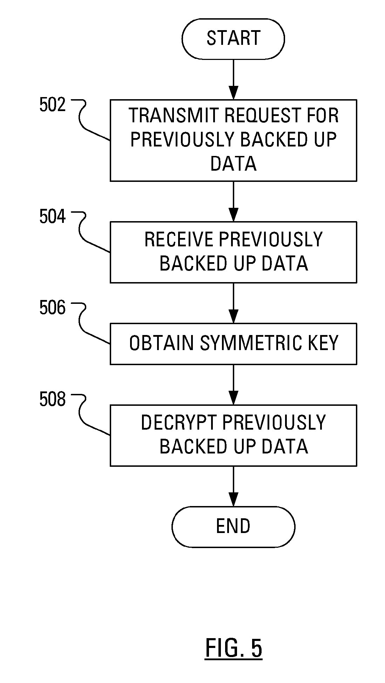

In one embodiment, the backup data may be restored at the mobile communication device 100 from which the backup data was received. In such an embodiment, a data restore operation, example steps of which are presented in FIG. 5, begins when the processor 228, under control of an application that is to restore previously backed up application-specific data, transmits (step 502) a request for the previously backed up application-specific data to the backup location, e.g., the mobile device server 118. Upon receiving (step 504) the previously backed up application-specific data from the mobile device server 118, the processor 228 may obtain (step 506) the symmetric key 124 from the non-volatile store. The processor 228 may then decrypt (step 508) the previously backed up application-specific data using the symmetric key 124. Conveniently, the user need not type in a password or otherwise provide authentication data to decrypt the previously backed up application-specific data.

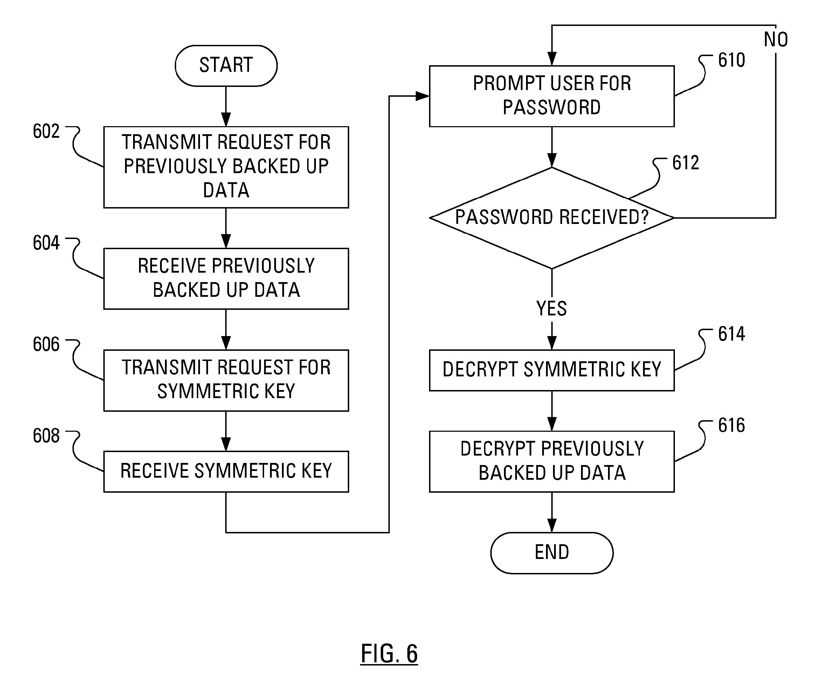

In another embodiment, the backup data may be restored at a device distinct from the mobile communication device 100 from which the backup data was transmitted to the backup location. In such an embodiment, a data restore operation, example steps of which are presented in FIG. 6, begins when a processor at the distinct device, under control of an application that is to restore previously backed up application-specific data, transmits (step 602) a request for the previously backed up application-specific data to the backup location, e.g., the mobile device server 118. Upon receiving (step 604) the previously backed up application-specific data from the mobile device server 118 and determining that the data has been encrypted, the processor at the distinct device may transmit (step 606) a request, to the mobile device server 118, for the symmetric key 124.

Upon receiving (step 608), from the mobile device server 118, the encrypted version of the symmetric key 124, the processor at the distinct device may prompt (step 610) the user of the distinct device for authentication data. Responsive to determining (step 612) that authentication data has been received, the processor at the distinct device may decrypt (step 614) the encrypted version of the symmetric key to obtain the symmetric key 124. The processor at the distinct device may then decrypt (step 616), using the symmetric key 124, the previously backed up application-specific data.

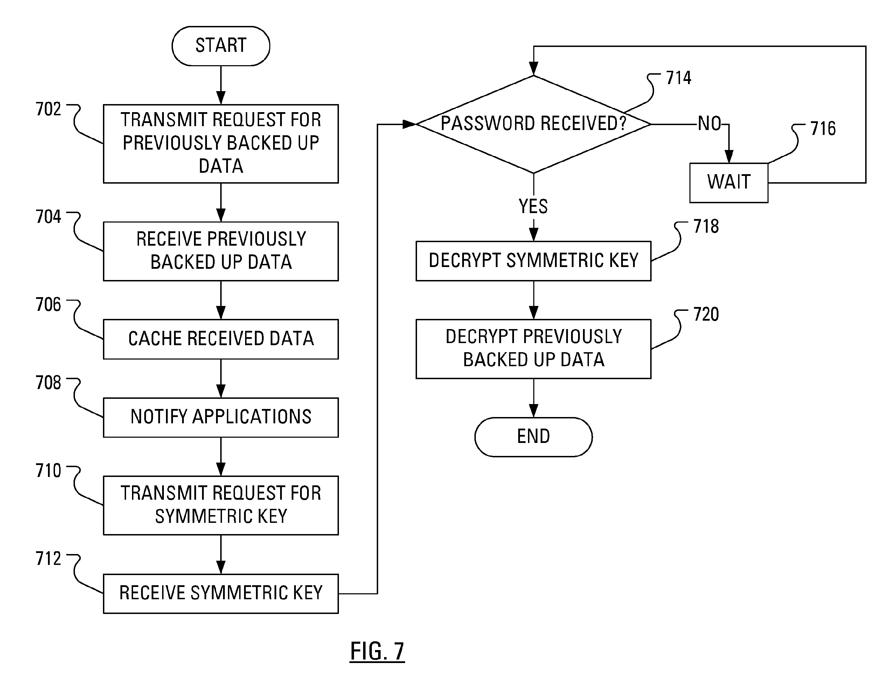

In an alternative approach, illustrated in FIG. 7, the processor at the distinct device transmits (step 702) a request for the previously backed up application-specific data to the backup location, e.g., the mobile device server 118. Upon receiving (step 704) the previously backed up application-specific data from the mobile device server 118, the processor at the distinct device may cache (step 706) the data. In particular, the encrypted application-specific data received from the mobile device server 118 may be stored in persistent memory, such as the flash memory 216. Conveniently, based on the use of persistent memory, even if the distinct device is turned off and then restarted, the encrypted application-specific data received from the mobile device server 118 will be available for decrypting.

The processor at the distinct device may then notify (step 708) all concerned applications that there is encrypted application-specific data waiting, but that the application-specific data cannot currently be decrypted. The processor at the distinct device may transmit (step 710) a request, to the mobile device server 118, for the symmetric key 124.

Upon receiving (step 608), from the mobile device server 118, the encrypted version of the symmetric key 124, the processor at the distinct device may, instead of immediately prompting the user to provide authentication data, wait until the next time the user self-authenticates to the distinct device, perhaps for the purpose of accessing data of applications on the distinct device. In particular, the processor at the distinct device may periodically determine (step 714) whether authentication data has been received. Upon determining (step 714) that authentication data has not been received, the processor at the distinct device may wait (step 716) a predetermined duration before again determining (step 714) whether authentication data has been received.

Upon determining (step 714) that authentication data has been received, the processor at the distinct device may decrypt (step 718), using the authentication data, the encrypted version of the symmetric key 124 to obtain the symmetric key 124. The processor at the distinct device may then decrypt (step 720), using the symmetric key 124, the previously backed up application-specific data.

The likelihood is high that when the user establishes authentication data for the distinct device, the authentication data will be the same authentication data with which the symmetric key 124 was encrypted on the mobile communication device 100.

The user may select distinct authentication data for access to distinct devices. The maintenance of the timestamp indicating when the symmetric key 124 was generated allows for the prompting (step 610, FIG. 6) of the user to include an indication of some information from the timestamp. For example, the prompt may say something like "Please enter your device password as it was on January 20, 2009".

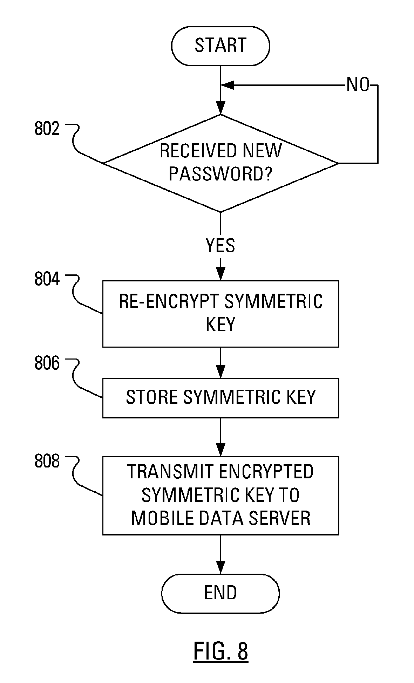

In some instances, the user of the mobile communication device 100 will occasionally change the password used for access to the mobile communication device 100. Where the password used to access the mobile communication device 100 is the same password used in step 306 (FIG. 3) to encrypt the symmetric key 124, the processor 228 may carry out a method, example steps of which are presented in FIG. 8, to re-encrypt the symmetric key 124 with the new password. Responsive to determining (step 802) that an indication of the new password has been received, the processor 228 may re-encrypt (step 804) the symmetric key 124. The processor 228 may then store (step 806) the encrypted symmetric key, along with a timestamp indicating when the symmetric key was re-encrypted, to the non-volatile storage. The processor 228 may then transmit (step 808) the encrypted symmetric key, along with the timestamp indicating when the symmetric key was re-encrypted, to the mobile device server 118.

Conveniently, none of the encrypted application-specific data that is already backed up to the mobile device server 118 needs to be re-encrypted or retransmitted to the mobile device server 118 when the user changes the authentication data used to access the mobile communication device 100. The symmetric key 124, i.e., the key used to encrypt (step 402, FIG. 4) the application-specific data, has not changed. Only the authentication data, e.g., password, used to encrypt (step 306, FIG. 3) the symmetric key 124 has changed. Accordingly, only a very small amount of information needs to be transmitted to the backup location, e.g., to the mobile device server 118, responsive to an authentication data change.

If there is no device authentication data established, each application is allowed to determine whether to back up application-specific data in unencrypted form.

Upon determining that a user has elected not to require authentication data for access to the mobile communication device 100, after having authentication data in place when application-specific data was backed up to the backup location, the processor 228 notifies each application with backed up, encrypted, application-specific data of the elimination of the authentication data. Each application may, responsively, clear their respective backup stores or backup unencrypted data.

Note that the encryption of the backup data is transparent to the user. In one instance, a password-encrypted symmetric key is generated (step 304, FIG. 3) responsive to the user selecting a device password, an action that would have been taken without regard to security of backed up application-specific data.

The above-described embodiments of the present application are intended to be examples only. Alterations, modifications and variations may be effected to the particular embodiments by those skilled in the art without departing from the scope of the application, which is defined by the claims appended hereto.

## Claims

1. At a mobile communication device (100), a method of facilitating secure backing up of data in a backup location, said method comprising:
encrypting (306) a symmetric key to form an encrypted symmetric key;
transmitting (310) said encrypted symmetric key to said backup location; and
encrypting (402) said data with said symmetric key, thereby forming encrypted data.

2. The method of claim 1 further comprising transmitting (404) said encrypted data to said backup location.

3. The method of claim 1 or claim 2 further comprising receiving (302) authentication data, optionally comprising an alphanumeric password, and wherein said encrypting involves using said authentication data.

4. The method of any of claims 1 to 3 further comprising generating (304) said symmetric key, and optionally
wherein said generating said symmetric key involves using said authentication data.

5. The method of any preceding claim further comprising:
receiving an indication of a new password;
encrypting said symmetric key using said new password, to form a new encrypted symmetric key; and
transmitting said new encrypted symmetric key to said backup location.

6. The method of any preceding claim wherein said data comprises application-specific data.

7. The method of any preceding claim further comprising storing, in a non-volatile portion of a memory at said mobile communication device, said symmetric key, and optionally further comprising:
transmitting (602) a request, to said backup location, for said encrypted data;
receiving (604) said encrypted data;
retrieving (608), from said memory, said symmetric key; and
using said symmetric key to decrypt (616) said encrypted data.

8. A mobile communication device (100) comprising:
a processor (228) adapted to:
encrypt a symmetric key to form an encrypted symmetric key; and
encrypt said data with said symmetric key, thereby forming encrypted data; and
a transmitter (252) adapted to, responsive to commands from said processor:
transmit said encrypted symmetric key to a backup location..

9. At a mobile communication device (100), a method of restoring previously backed up data, said method comprising:
transmitting (702) a request for said previously backed up data;
receiving (704) said previously backed up data;
transmitting (710) a request for a key used to encrypt said previously backed up data;
receiving (712) said key;
using authentication data to decrypt (718) said key, thereby producing a decrypted key; and
using said decrypted key to decrypt (720) said previously backed up data.

10. The method of claim 9 further comprising displaying a prompt for said authentication data.

11. The method of claim 9 or claim 10 further comprising, responsive to said receiving said previously backed up data, notifying applications of said receiving.

12. A mobile communication device (100) comprising:
a transmitter (252) adapted to:
transmit a request for previously backed up data; and
transmit a request for a key used to encrypt said previously backed up data;
a receiver (250) adapted to:
receive said previously backed up data; and
receive said key; and
a processor (228) adapted to:
use authentication data to decrypt said key, thereby producing a decrypted key; and
use said decrypted key to decrypt said previously backed up data.

13. At a mobile communication device (100), a method of facilitating access to encrypted data restored from a backup location, said method comprising:
receiving (712) an encrypted version of a key, where said key has been used to encrypt said encrypted data;
determining (714) that authentication data has been received; and
using said authentication data to decrypt (718) said encrypted version of said key.

14. The method of claim 13 further comprising, before said determining:
determining (714) that said authentication data has not been received; and
waiting (716) a predetermined duration.

15. The method of claim 13 or claim 19 further comprising:
receiving (704), from said backup location, said encrypted data; and
using said key to decrypt (720) said encrypted data.

16. At a mobile communication device (100), a method of facilitating access to encrypted data restored from a backup location, said method comprising:
receiving (712) an encrypted version of a key, where said key has been used to encrypt said encrypted data;
employing a user interface of said mobile communication device to display a prompt requesting authentication data;
determining (714) that said authentication data has been provided ; and
using said authentication data to decrypt (718) said encrypted version of said key.
